# EUROPEAN PATENT SPECIFICATION

(11) **EP 1 123 150 B1**
(45) Date of publication and mention of the grant of the patent: **14.06.2006**
(21) Application number: 99933332.1
(22) Date of filing: 11.06.1999
(51) Int. Cl.: B01D 1/00

(54) **LIQUID SEPARATOR FOR A LIQUID INJECTED COMPRESSOR**
FLÜSSIGKEITSTRENNVORRICHTUNG FÜR KOMPRESSOREN MIT FLÜSSIGKEITSEINSPRITZUNG
SEPARATEUR DE LIQUIDE POUR COMPRESSEUR A INJECTION DE LIQUIDE

(30) Priority: 07.07.1998 SE 9802432
(43) Date of publication of application: 16.08.2001
(73) Proprietor: SVENSKA ROTOR MASKINER AB, S-104 65 Stockholm (SE)
(72) Inventor: PAMLIN, Roland, S-142 40 Skog s (SE); SÖDERLUND, Frits, S-133 44 Saltsjöbaden (SE)
(74) Representative: Karlsson, Leif Karl Gunnar
(86) International application number: PCT/SE1999/001028
(87) International publication number: WO 2000/001461

(56) References cited:
- WO-A1-81/03207
- GB-A- 2 063 097
- GB-A- 2 120 122
- US-A- 4 478 054
- US-A- 4 662 190

## Description

The present invention relates to a liquid separator arrangement for use with a liquid injected compressor, particularly, but not exclusively, to an oil separator arrangement for an oil-injected helical screw compressor.

The document GB-A-2063097 describes an oil mist separator comprising several concentric tubular filter elements.

Present-day liquid separators that are fitted directly to the outlet passageway of a compressor have a relatively poor efficiency and often have an oil carry-over of between 3.5 to 4.5 percent, in the best of cases a carry-over of between 2 to 3 percent. Even this latter value is unsuitably high and a reduction to lower values would be beneficial.

Such reduction has been made possible by means of a liquid separator arrangement that has the characteristic features set forth in the accompanying Claim 1. As will be apparent from the Claim, the liquid separator arrangement has two separation stages that include an inner, coarse separator and a fine separator which is positioned radially outwards of the coarse separator and through which gas that contains liquid droplets passes radially outwards via an intermediate free space in which the gas flow is able to stop slightly prior to flowing into the fine separator. Oil carry-over values as low as 0 to 0.6 percent have been measured with an oil separator arrangement of this construction.

Particularly suitable embodiments of the liquid separator arrangement for achieving these low carry-over values have the characteristic features set forth in the accompanying dependent Claims.

The invention will now be described in more detail with reference to the accompanying drawings, in which

Figures 1 is a longitudinal sectional view of a selected exemplifying embodiment of an inventive oil separator arrangement mounted on the high pressure end-wall of a helical screw compressor, part of the compressor also being shown in longitudinal section; and

Figure 2 is a graph which shows the percentage of oil carried over from the oil separator shown in Figure 1, as a function of the vaporisation temperature of the refrigerant.

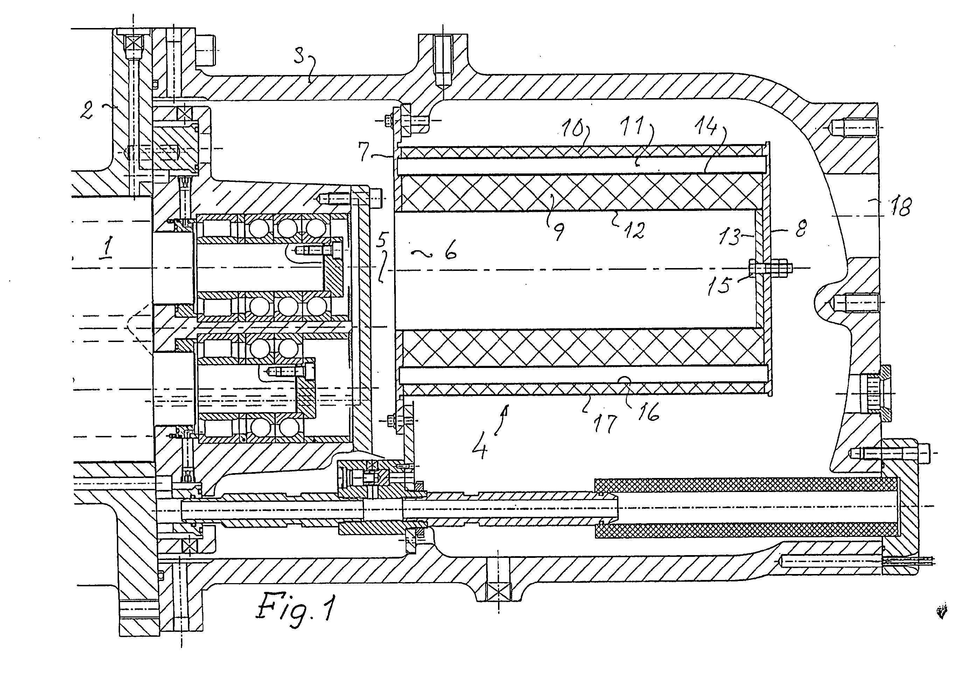

In Figure 1, a high pressure part of a helical screw cooling compressor is designated 1 and its high pressure end-wall is designated 2. The end-wall 2 has mounted thereon a housing 3 which houses an oil separator arrangement 4 constructed in accordance with the invention. The compressor 1 has an outlet passageway or duct 5 positioned centrally opposite an inlet opening 6 leading to the oil separator arrangement 4. The oil separator arrangement 4 has a vertical, first end-wall 7 which includes an inlet opening 6 in the end thereof proximal to the compressor 1. One end of a first perforated sleeve 12 is fastened, e.g. welded; to the periphery of the opening 6. The centre line of the sleeve 12 is essentially horizontal. The other end of the first sleeve 12 is closed by a disc-shaped member 13. A second perforated sleeve 14 is placed outwardly of and concentrically with the first sleeve 12. The end of the sleeve 14 that faces towards the compressor is inserted in a circular groove in the end-wall 7. A coarse separator 9 is provided in the space formed between said perforated sleeves 12, 14, said sleeves forming walls that hold the coarse separator in place.

The illustrated liquid separator arrangement 4 also includes a fine separator 10 disposed between mutually spaced and mutually concentric perforated sleeves, a third sleeve 16 and a fourth sleeve 17, outside the third sleeve 16. The fine separator 10 including said sleeves 16 and 17 is located outwardly of the coarse separator 9 and in spaced relationship therewith. A cavity 11 is defined between the coarse separator 9 and the fine separator 10. The first ends of sleeves 16 and 17 are received in grooves in the first end-wall 7.

The liquid separator 4 also includes a second end-wall 8, which is parallel and concentrical with the disc plate 13. The end-wall 8 includes grooves into which the second, third and fourth sleeves 14, 16 and 17 are inserted and held in place by a bolt and nut joint, 15, said bolt being inserted through openings in the second end-wall 8 and in the centre of the disc plate 13. All of the four perforated sleeves 12, 14, 16 and 17 have a perforated area that exceeds 50 percent of the sleeve area.

The coarse separator 9 may be a spun wire net, e.g. a "Becoil Demister Mech: 304 L stainless steel type H", said net being applied in a number of layers that together provide a thickness of 2.5 to 3.5 cm. The net is wound with a hardness or compactness such that the calculated rate of gas flow will not be less than 0.2 metre per second and not higher than 0.5 metre per second. This filter constitutes a first part of the oil separating process and separates the major part of the oil flow (80-90 %) from the system. The net layer is held in place with the intended degree of compactness by the first and the second sleeve 12 and 14, these sleeves having a perforated area which exceeds 50 percent of the area of the sleeve surface. The holes in the sleeves have a diameter of 8-10 mm.

The fine separator 10, which is held in place by the third sleeve 16 and the fourth sleeve 17, is comprised of a porous fabric made of oil-resistant and oil-repelling fibres. The fabric is wound loosely around the third perforated sleeve 16, to a thickness of 6-8 mm. In order to be able to drain-off oil separated in the coarse separator 9 and also to form an effective separator for the finely divided oil remaining in the fluid flow exiting from the coarse separator 9, it is necessary for the layer of fibre fabric to have a determined porosity, which is determined by the weight per unit area of the fabric layer. According to the invention, the fabric layer will have a weight per unit area of 130-170 grams per square metre of fabric having a thickness of 1 millimetre. In the case of typical temperatures of the oil that comes into contact with the fibre material, said material may comprise a polyamide fibre material or some corresponding material. In the case of higher oil temperatures, the material used will conveniently be a carbon fibre or aramide fibre material, preferably a para-aramide material (KEVLAR, trade name for para-amide fibres, owner DU PONT, U.S.A.).

When the cooling compressor 1 is in operation, refrigerant, e.g. R134a (tetrafluoroethane, CF₃CFH₂) containing oil in larger or small droplets, down to mist-size, exits from the outlet passageway 5 of the compressor and enters through the inlet opening of the oil separator arrangement 4 at a rate of flow of about 6 metres per second, or at a higher rate. Because the disc plate 13 at the end of the first sleeve 12 opposite the inlet opening 6 prevents continued flow parallel with the sleeve, the refrigerant flow will change direction and continue radially outwards through the openings or perforations in the first sleeve 12. The refrigerant will flow radially through the coarse separator 9 and out through the second sleeve 14.

Most of the oil droplets will fasten on the coarse separator net and on the surfaces of the sleeves, and will run down therefrom and leave the coarse separator 9 through the lowermost openings or perforations in the outer tube or sleeve 14. The oil-depleted refrigerant continues to flow radially outwards through the fine separator 10, where most of the remaining oil is separated from the fluid flow.

The sleeve 14 thus functions as a collecting surface for the oil that is extracted by the coarse separator and that runs down from the lower part thereof. The oil that drains from the coarse separator is collected in the lower part of the cavity 11 outside the sleeve 14. The cavity 11 has a radial extension of about 1.5 to 2.5 cm. The oil that runs from the coarse separator fills a bottom segment of the cavity 11, corresponding to 60 to 90°, and then drains through the outer, fine separator 10. The inner limitation of the fine separator forms the outer limitation of the cavity or space 11.

Oil separated by the coarse separator 9 and collecting on the lowermost part of the fine separator 10 is drained through the lower segmental part of the fibre cloth, this oil-draining segmental part of said separator 10 corresponding to from 60 to 90° of the cylindrical periphery of said separator 10, while the remaining 270-300° of the periphery forms the oil separating area of the fine separator over which remaining, finely-divided oil is extracted from the refrigerant. In order for the oil separator arrangement to operate effectively and to achieve a balance with respect to gas throughflow and oil throughflow, the oil level must only take-up at most 25 percent of the area of the fine separator 10, i.e. the segment may not exceed 90°. Neither will the rate of gas flow through the fine separator 10 be less than 0.1 metre per second.

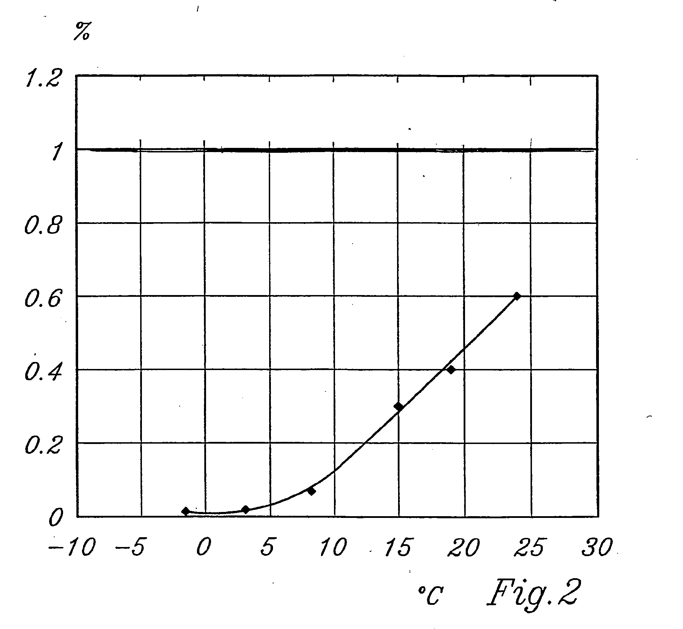

The reason why this improved separation of the liquid-carried gas is achieved by the invention is difficult to explain, since it is difficult to study the passage of the liquid droplets through the coarse and fine separators 9, 10. The curve showing the oil carry-over, i.e. the oil that accompanies the gas, shown in Figure 2, was obtained by carrying out measurements on a cooling compressor while using the refrigerant R134a. Figure 2 shows the concentration in weight percent of the oil that accompanies the gaseous refrigerant as a function of its vaporisation temperature. When running the same compressor with a conventionally arranged oil separator in the form of a vertical, wire net plate, an oil carry-over of 3-10 percent was obtained, this variation in percentage depending on the vaporisation temperature.

It will be understood that the invention is not restricted to the illustrated and described exemplifying embodiment thereof, and that modifications can be made in several ways within the scope of the invention defined in the following Claims. For instance, the numerical values can be varied depending on different operating conditions, and all or some of the sleeves 12, 14 and 16, 17 can be replaced with rigid net structures of corresponding permeability. The permeability of such a rigid net structure may be greater than the permeability of the perforated sleeves, although in this case the greater permeability of said rigid net structure will conveniently be compensated for by a lower permeability of the enclosed coarse-separating and fine-separating materials respectively. As will be understood, the separator sleeves may be a cross-sectional shape other than circular, such as a square shape, a pentagonal shape, and so on. The sleeves may also taper.

## Claims

1. A liquid separator arrangement for a liquid-injected compressor, particularly an oil separator arrangement for an oil-injected helical screw cooling compressor, **characterised in that** the liquid separator arrangement is located between two end-walls (7, 8) and includes an inner, tubular coarse separator (9) and an outer, tubular fine separator (10) wherein said tubular separators are mutually spaced so as to form an interspace (11) therebetween, and wherein one end-wall (7) includes an opening (6) which connects the internal, tubular area of the coarse separator (9) with a compressed gas outlet passageway (5) in the compressor (1), and wherein the coarse separator (9) and the fine separator (10) are made of a gas and oil permeable material.

2. A liquid separator arrangement according to Claim 1, **characterised in that** the coarse separator (9) includes a net layer.

3. A liquid separator arrangement according to Claim 2, **characterised in that** the net is disposed on a tubular inner wall which includes many openings and which constitutes the inner limitation of the coarse separator.

4. A liquid separator arrangement according to Claim 2 or 3, **characterised in that** the coarse separator (9) has a tubular outer wall that includes many openings whose total area corresponds to at least 50 percent of the total wall area.

5. A liquid separator arrangement according to one or more of Claims 1-4, **characterised in that** the fine separator (10) includes a porous fibre material, the fibres of which are non-absorbent with respect to oil.

6. A liquid separator arrangement according to Claim 5, **characterised in that** the fibre material is disposed between a tubular perforated inner wall and a similar perforated outer wall.

7. A liquid separator arrangement according to Claim 6, **characterised in that** respective tubular walls (12, 14; 16, 17) of the coarse separator (9) and the fine separator (10) are mounted between the end-walls (7, 8) with the ends of said tubular walls (12, 14; 16, 17) guided in grooves on the inner surface of respective end-walls.

8. A liquid separator arrangement according to one or more of Claims 1-7, **characterised in that** the arrangement is dimensioned for a gas flow rate of 0.2-0.5 metre per second through said coarse separator (9).

9. A liquid separator arrangement according to one or more of Claims 1-7, **characterised in that** the separator arrangement is dimensioned so that the rate of gas flow through the fine separator (10) will be greater than 0.1 metre per second.

## Patentansprüche

1. Flüssigkeitstrennanordnung für einen Flüssigkeitseinspritzkompressor, insbesondere eine Öltrennanordnung für einen Öleinspritz-Kühlkompressor mit spiralförmiger Schraube, **dadurch gekennzeichnet, dass** die Flüssigkeitstrennanordnung sich zwischen zwei Endwänden (7, 8) befindet und eine innere rohrförmige Grobtrenneinrichtung (9) und eine äußere rohrförmige Feintrenneinrichtung (10) umfasst, wobei die rohrförmigen Trenneinrichtungen derart zueinander beabstandet sind, dass zwischen ihnen ein Zwischenraum (11) gebildet wird, und wobei eine Endwand (7) eine Öffnung (6) umfasst, die die innere rohrförmige Fläche der Grobtrenneinrichtung (9) mit einem Auslassdurchgang (5) für komprimiertes Gas in dem Kompressor (1) verbindet, und wobei die Grobtrenneinrichtung (9) und die Feintrenneinrichtung (10) aus einem gas- und öldurchlässigen Material hergestellt sind.

2. Flüssigkeitstrennanordnung nach Anspruch 1, **dadurch gekennzeichnet, dass** die Grobtrenneinrichtung (9) eine Netzschicht umfasst.

3. Flüssigkeitstrennanordnung nach Anspruch 2, **dadurch gekennzeichnet, dass** das Netz auf einer rohrförmigen inneren Wand angeordnet ist, die viele Öffnungen umfasst und die die innere Begrenzung der Grobtrenneinrichtung bildet.

4. Flüssigkeitstrennanordnung nach Anspruch 2 oder 3, **dadurch gekennzeichnet, dass** die Grobtrenneinrichtung (9) eine rohrförmige äußere Wand aufweist, die viele Öffnungen umfasst, deren Gesamtfläche mindestens 50 Prozent der gesamten Wandfläche entspricht.

5. Flüssigkeitstrennanordnung nach einem oder mehreren der Ansprüche 1 bis 4, **dadurch gekennzeichnet, dass** die Feintrenneinrichtung (10) ein poröses Fasermaterial umfasst, dessen Fasern Öl nicht absorbieren.

6. Flüssigkeitstrennanordnung nach Anspruch 5, **dadurch gekennzeichnet, dass** das Fasermaterial zwischen einer rohrförmigen perforierten inneren Wand und einer ähnlich perforierten äußeren Wand angeordnet ist.

7. Flüssigkeitstrennanordnung nach Anspruch 6, **dadurch gekennzeichnet, dass** die jeweiligen rohrförmigen Wände (12, 14; 16, 17) der Grobtrenneinrichtung (9) und der Feintrenneinrichtung (10) zwischen den Endwänden (7, 8) befestigt sind, wobei die Enden der rohrförmigen Wände (12, 14; 16, 17) in Nuten der Innenfläche der jeweiligen Endwände geführt werden.

8. Flüssigkeitstrennanordnung nach einem oder mehreren der Ansprüche 1 bis 7, **dadurch gekennzeichnet, dass** die Anordnung für eine Gasflussrate von 0,2 - 0,5 Meter pro Sekunde durch die Grobtrenneinrichtung (9) bemessen ist.

9. Flüssigkeitstrennanordnung nach einem der Ansprüche 1 bis 7, **dadurch gekennzeichnet, dass** die Trennanordnung derart bemessen ist, dass die Gasflussrate durch die Feintrenneinrichtung (10) größer als 0,1 Meter pro Sekunde ist.

## Revendications

1. Système séparateur de liquide pour un compresseur à injection de liquide, en particulier un système séparateur d'huile pour un compresseur de refroidissement à vis hélicoïdale et injection d'huile, **caractérisé en ce que** le système séparateur de liquide est placé entre deux parois d'extrémité (7, 8) et comprend un séparateur grossier (9) tubulaire intérieur et un séparateur fin (10) tubulaire extérieur, dans lequel lesdits séparateurs tubulaires sont mutuellement espacés de manière à former un interstice (11) entre eux, et dans lequel une paroi d'extrémité (7) comprend une ouverture (6) qui relie la zone tubulaire intérieure du séparateur grossier (9) à un passage (5) de sortie de gaz comprimé dans le compresseur (1), et dans lequel le séparateur grossier (9) et le séparateur fin (10) sont constitués d'un matériau perméable aux gaz et à l'huile.

2. Système séparateur de liquide selon la revendication 1, **caractérisé en ce que** le séparateur grossier (9) comprend une couche de filet.

3. Système séparateur de liquide selon la revendication 2, **caractérisé en ce que** le filet est placé sur une paroi tubulaire intérieure qui comprend de nombreuses ouvertures et qui constitue la limite intérieure du séparateur grossier.

4. Système séparateur de liquide selon la revendication 2 ou 3, **caractérisé en ce que** le séparateur grossier (9) a une paroi tubulaire extérieure qui comprend de nombreuses ouvertures dont l'aire totale correspond au moins à 50 % de l'aire de paroi totale.

5. Système séparateur de liquide selon une ou plusieurs des revendications 1 à 4, **caractérisé en ce que** le séparateur fin (10) comprend un matériau fibreux poreux, dont les fibres sont non absorbantes pour l'huile.

6. Système séparateur de liquide selon la revendication 5, **caractérisé en ce que** le matériau fibreux est placé entre une paroi intérieure perforée tubulaire et une paroi extérieure perforée similaire.

7. Système séparateur de liquide selon la revendication 6, **caractérisé en ce que** les parois tubulaires respectives (12, 14 ; 16, 17) du séparateur grossier (9) et du séparateur fin (10) sont montées entre les parois d'extrémité (7, 8), les extrémités desdites parois tubulaires (12, 14 ; 16, 17) étant guidées dans des gorges prévues sur la surface intérieure des parois d'extrémité respectives.

8. Système séparateur de liquide selon une ou plusieurs des revendications 1 à 7, **caractérisé en ce que** le système est dimensionné pour un débit d'écoulement de gaz de 0,2 à 0,5 mètre par seconde à travers ledit séparateur grossier (9).

9. Système séparateur de liquide selon une ou plusieurs des revendications 1 à 7, **caractérisé en ce que** le système séparateur est dimensionné en sorte que le débit d'écoulement du gaz à travers le séparateur fin (10) soit supérieur à 0,1 mètre par seconde.
